# EUROPÄISCHE PATENTSCHRIFT

(11) **EP 1 038 124 B1**
(45) Veröffentlichungstag und Bekanntmachung des Hinweises auf die Patenterteilung: **31.10.2001**
(21) Anmeldenummer: 98965762.2
(22) Anmeldetag: 04.12.1998
(51) Int. Cl.: F16H 15/38

(54) **STUFENLOSES REIBRADGETRIEBE**
INFINITELY VARIABLE FRICTION GEAR
ENGRENAGE A FRICTION VARIABLE EN CONTINU

(30) Priorität: 10.12.1997 DE 19754725
(43) Veröffentlichungstag der Anmeldung: 27.09.2000
(73) Patentinhaber: ZF FRIEDRICHSHAFEN Aktiengesellschaft, 88038 Friedrichshafen (DE)
(72) Erfinder: SICH, Bernhard, D-88045 Friedrichshafen (DE)
(86) Internationale Anmeldenummer: EP9807894
(87) Internationale Veröffentlichungsnummer: WO9930059

(56) Entgegenhaltungen:
- EP-A- 0 172 023
- EP-A- 0 459 291
- US-A- 1 833 475
- US-A- 3 164 025
- US-A- 3 299 744
- US-A- 4 526 051
- US-A- 4 614 125
- US-A- 4 955 246

## Beschreibung

Die vorliegende Erfindung betrifft ein stufenloses Reibradgetriebe nach dem Oberbegriff des Anspruchs 1.

Ein derartiges stufenloses Reibradgetriebe weist üblicherweise koaxial zu einer gemeinsamen Welle angeordnete Eingangs- und Ausgangsscheiben auf, die paarweise zueinander angeordnet sind und deren Innenflächen toroidförmig ausgestaltet sind sowie zwischen den Paaren von Eingangs- und Ausgangsscheiben angeordnete Reibräder. Diese Reibräder stehen sowohl mit den Eingangsscheiben als auch mit den Ausgangsscheiben in Reibkontakt und übertragen das ihnen von der Eingangsscheibe übertragene Drehmoment auf die Ausgangsscheibe durch reibschlüssigen Kontakt, wobei die Drehzahl der Reibräder um so höher ist je grösser der Abstand zwischen ihrer Berührungsstelle mit der Eingangsscheibe und der Drehachse ist. Die Drehzahl der Ausgangsscheiben hingegen ist um so grösser, je näher die Berührungsstelle zwischen Reibrad und Ausgangsscheibe an der Drehachse liegt. Durch Verschwenkung der Reibräder kann demzufolge die Drehzahl der Ausgangsscheibe stufenlos und beliebig eingestellt werden. Zu diesem Zweck sind die Drehachsen der Reibräder an einem Träger gelagert, der über eine Verschwenkeinrichtung ansteuerbar ist.

Das Grundprinzip eines derartigen stufenloses Reibradgetriebes ist bereits in der US-2 152 796, die im Jahre 1939 veröffentlicht wurde, beschrieben. Darin sind zwei Paare konkaver Eingangs- und Ausgangsscheiben vorgesehen, zwischen denen schwenkbar gelagerte Reibräder angeordnet sind, so dass ein über eine Eingangswelle den Eingangsscheiben und den Reibrädern übertragenes Drehmoment je nach Relativstellung der Reibräder mit einem davon abhängigen Übersetzungsverhältnis über die Ausgangsscheiben, eine Zahnradstufe und eine Hohlwelle einem Summierungsgetriebe in Form eines Planetengetriebes zugeführt wird. Der Steg des Planetengetriebes treibt eine Ausgangswelle, die mit den Antriebsrädern, z. B. eines Kraftfahrzeuges, verbunden ist. Die Ausgangswelle kann dabei parallel zur und im Abstand von der Eingangswelle angeordnet sein. Das Ausgangszahnrad und die beiden Ausgangsscheiben sind drehbar auf einer Hülse gelagert, die an ihren Enden in Lagerstützen abgestützt ist. Die Anordnung der Lagerstützen zwischen jeweils einer Ein- und Ausgangsscheibe setzt einen genügend grossen Bauraum zwischen diesen Scheiben voraus.

Das Getriebe nach der US-PS 3 739 658 weist ebenfalls einen zweizügigen Variator mit zwei paarweise angeordneten Ein- und Ausgangsscheiben auf, zwischen denen schwenkbar gelagerte Reibräder angeordnet sind. Bei dieser Konstruktion ist eine Lagerstütze vorhanden, die Bestandteil des Gehäuses ist und die räumlich zwischen den beiden Ausgangsscheiben liegend angeordnet ist. Die von den Ausgangsscheiben abfliessende Leistung wird über ein Planetengetriebe, das zudem als Differential wirkt, einer Hohlwelle zugeleitet. Die Hohlwelle ist mit dem Ausgangszahnrad drehfest verbunden und wird über Kugellager in der Lagerstütze drehbar gehalten.

Das Ausgangszahnrad steht mit einem Zahnrad in Antriebsverbindung, das drehfest am Gehäuse eines Drehmomentwandlers befestigt ist. Dieser treibt die Ausgangswelle des Getriebes. Die Anordnung des Drehmomentwandlers am Eingang der Ausgangswelle bedingt einen relativ grossen Achsabstand zwischen Ein- und Ausgangswelle des Getriebes. Damit sind die Anwendungsfälle für dieses Getriebe stark eingeschränkt, weil der erforderliche Einbauraum nicht immer zur Verfügung steht.

Aus der gattungsgemäßen US-4 893 517 ist ein stufenloses Reibradgetriebe bekannt mit einer Eingangswelle, die ein Gehäuse durchsetzt. Das Gehäuse ist mittels einer Trennwand in zwei Hohlräume unterteilt, in denen jeweils eine Eingangsscheibe und eine ihr gegenüberliegende Ausgangsscheibe mit dazwischenliegenden Reibrädern gelagert sind, wobei sowohl die Eingangsscheibe als auch die Ausgangsscheibe in den beiden Hohlräumen auf einer gemeinsamen Achse liegen, zu der die Reibräder zur Erzielung der gewünschten Geschwindigkeitsübersetzung verschwenkt werden können. Die beiden Paare aus Eingangsscheiben und Ausgangsscheiben sind spiegelsymmetrisch zueinander in den Hohlräumen derart angeordnet, dass die beiden Ausgangsscheiben nebeneinander liegen, und zwar zu beiden Seiten der die beiden Hohlräume voneinander trennenden Trennwand, in der ein Zahnrad gelagert ist, welches von den beiden Ausgangsscheiben gemeinsam mit dem Ausgangsdrehmoment beaufschlagt wird.

Aufgabe der vorliegenden Erfindung ist es, den Bauaufwand eines derartigen stufenloses Getriebes zu verringern und die Herstellungskosten zu senken.

Die Erfindung löst die gestellte Aufgabe bei einem gattungsgemässen stufenloses Reibradgetriebe, das neben den Merkmalen des Oberbegriffs auch das Merkmal des kennzeichnenden. Teils des Hauptanspruchs aufweist. Eine vorteilhafte bauliche Ausgestaltung ist im Unteranspruch beschrieben.

Die mit der Erfindung erzielbaren Vorteile bestehen in der Verwendung erheblich weniger feststehender oder beweglicher Teile.

Im folgenden wird die Erfindung anhand der Zeichnung näher erläutert.
Es zeigen:
- Fig. 1: einen Axialschnitt durch ein herkömmliches Reibradgetriebe,
- Fig. 2: einen Radialschnitt entlang der Linie II/II von Fig. 1 und
- Fig. 3: einen Radialschnitt entlang der gleichen Linie durch ein erfindungsgemäss ausgestaltetes Reibradgetriebe.

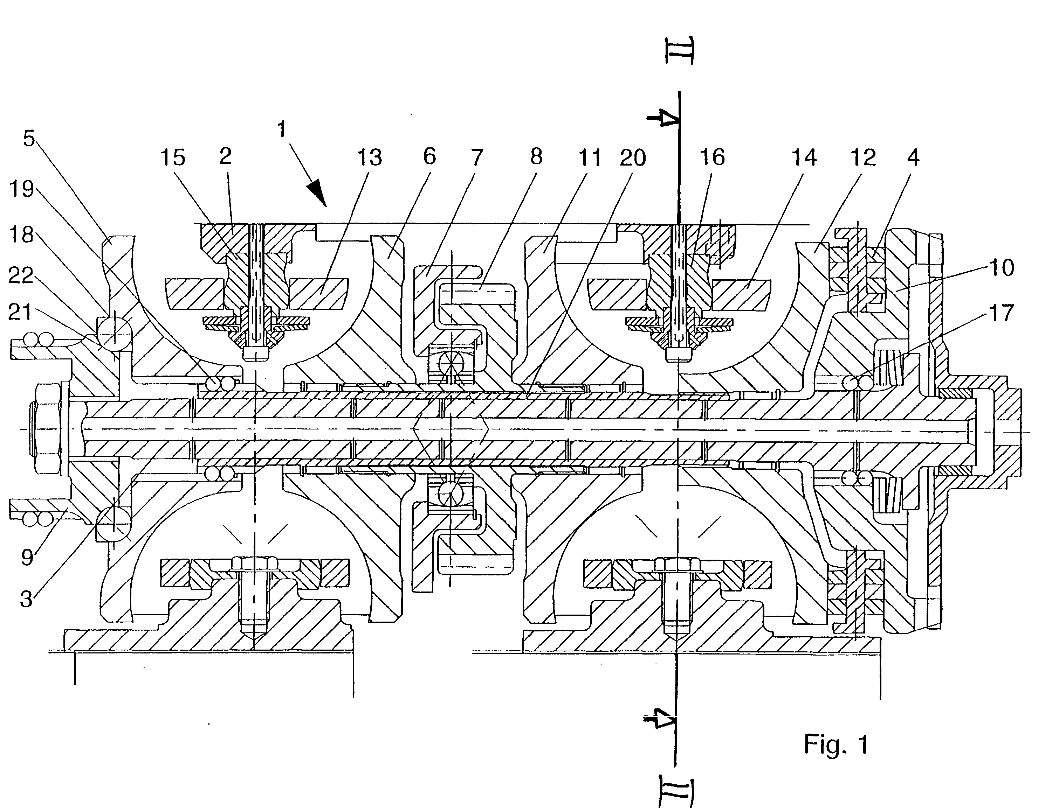

In Fig. 1 ist ein Schnitt durch ein stufenloses Getriebe dargestellt, wobei im folgenden nur die für das Verständnis der Erfindung wesentlichen Bauteile beschrieben werden.

Das Reibradgetriebe 1 (bzw. Toroidgetriebe) weist eine Eingangswelle 3 auf, die mit einem nicht dargestellten Anfahrelement, z. B. mit einem Drehmomentwandler oder einer nass laufenden Anfahrkupplung einer Antriebsmaschine eines Kraftfahrzeuges verbunden ist. Das Getriebe enthält zwei Getriebeeinheiten, die koaxial zur Eingangswelle 3 angeordnet sind. Die eine Getriebeeinheit weist eine Eingangsscheibe 5 und eine Ausgangsscheibe 6 auf, deren einander zugewandte Oberflächen toroidförmig ausgestaltet sind; die andere Getriebeeinheit weist eine Eingangsscheibe 12 und eine Ausgangsscheibe 11 auf, deren einander zugewandte Oberflächen ebenfalls toroidförmig ausgestaltet sind. In den beiden Getriebeeinheiten sind jeweils vorzugsweise zwei Reibräder vorgesehen, die an schwenkbaren Trägern befestigt sind; die Reibräder stehen in reibschlüssigem Kontakt mit den beiden ihnen zugewandten Oberflächen der Eingangsscheiben 5, 12 und der Ausgangsscheiben 6, 11, wobei die Reibräder jeder Getriebeeinheit symmetrisch zur Achse der Eingangswelle 3 angeordnet sind.

Werden nun die Reibräder durch die nicht im einzelnen dargestellte Verschwenkeinrichtung bezüglich der Längsachse der Eingangswelle 3 geneigt, so verschieben sich die Berührungspunkte des Umfangs der Reibräder, wodurch das Übersetzungsverhältnis zwischen einer Eingangs- und einer Ausgangsgeschwindigkeit kontinuierlich, d. h. stufenlos eingestellt werden kann.

Die Scheiben 5, 6, 11, 12 sind auf einer Drehmomentwelle 20 gelagert, die geringfügig in Axialrichtung relativ zur Eingangswelle verschiebbar ist. Die Eingangsscheibe 5 der einen Getriebeeinheit ist drehfest mit der Drehmomentwelle 20 verbunden, jedoch axial gleitend auf ihr über eine kugelförmige Verriegelungsanordnung 19 (Ball-Spline) gelagert. Auch die Eingangsscheibe 12 der anderen Getriebeeinheit ist drehfest durch eine Mitnahmeverzahnung mit der Drehmomentwelle 20 verbunden. Die beiden Ausgangsscheiben 6, 11 der beiden Getriebeeinheiten sind spiegelsymmetrisch zueinander und nebeneinander im Getriebe angeordnet und auf einer gemeinsamen Buchse angeordnet, wobei die Ausgangsscheibe 11 fest mit einem Zahnrad 8 verbunden ist, das drehbar die Drehmomentwelle 20 umgibt. Ein Drehmoment, das von der einen Eingangsscheibe 5 der Ausgangsscheibe 6 und ein Drehmoment, das von der anderen Eingangsscheibe 12 der Ausgangsscheibe 11 übertragen wird, wird von den beiden drehfest mit der Buchse verbundenen Ausgangsscheiben dem Zahnrad 8 übertragen, welches mit einem nicht dargestellten Zahnrad einer Ausgangswelle kämmt.

Mit 4 ist eine rollenförmige Anpresseinrichtung bezeichnet, die zwischen der Eingangsscheibe 12 mit einer Kurvenbahn und einer Scheibe 10 mit einer Kurvenbahn vorgesehen ist und die in Axialrichtung verschiebbar auf der Eingangswelle 3 gelagert ist sowie drehfest mit ihr verbunden ist, wobei sie mit Hilfe der Anpresseinrichtung 4 die Eingangsscheibe 12 in Axialrichtung zur Ausgangsscheibe 11 hin beaufschlagt. Die Scheibe 10 ist über eine Verriegelungseinrichtung 17 auf der Eingangswelle gelagert.

Mit 9 ist ein Axialflansch bezeichnet, an dem sich die Eingangsscheibe 5 über ein Universallager 18 abstützt. Die Eingangsscheibe 5 ist ferner über eine Verriegelungsanordnung (Ball Spline) 19, die eine drehfeste Verbindung mit der Drehmomentwelle 20 gewährleistet, axial verschiebbar auf letzterer gelagert.

Das Universallager 18, welches das herkömmliche Axiallager und das herkömmliche Radiallager der Eingangsscheibe 5 ersetzt, nimmt alle Radial- und Axialkräfte, die auf die Eingangsscheibe 5 einwirken, auf. Es ist vorzugsweise als Kugellager ausgestaltet, das einerseits in eine in der Eingangsscheibe eingearbeitete halbkreisförmige Aussparung 21 eingreift und andererseits in eine komplementär ausgebildete Aussparung 22 im Axialflansch 9. Diese beiden Aussparungen sind vorteilhafterweise höhenversetzt zueinander angeordnet.

Mit 7 ist ein topfförmiges Lagerstützglied bezeichnet, in dem das Zahnrad 8 gelagert ist und das die beiden Getriebeeinheiten voneinander trennt. Mit 13, 14, sind die oberen Querjoche bezeichnet und mit 15 und 16 Zapfen für die Träger der Reibräder, die über eine geeignete Befestigungsvorrichtung im Halterahmen 2 befestigt sind.

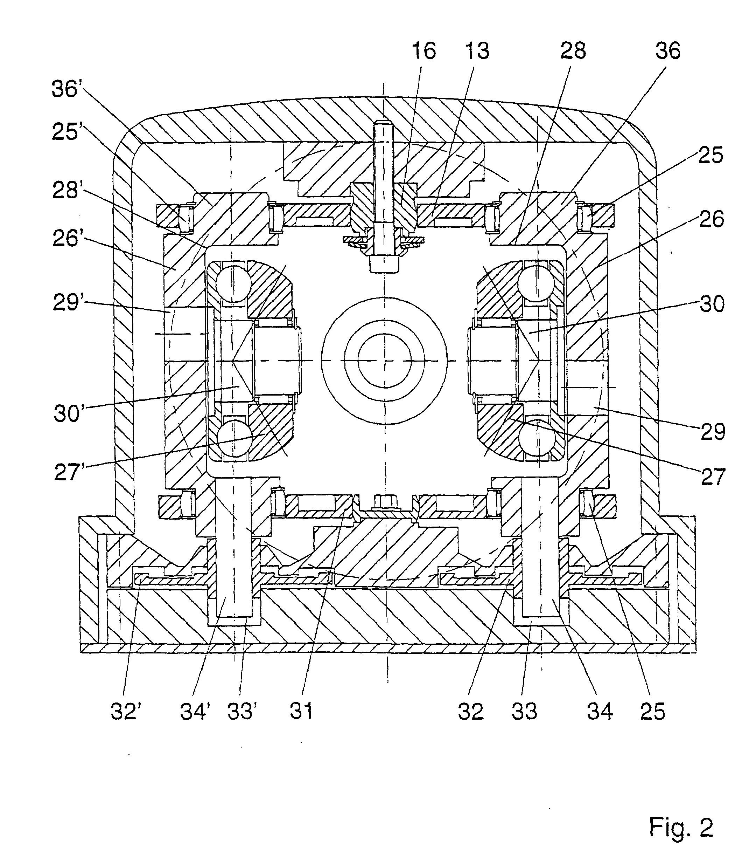

Aus dem in Fig. 2 dargestellten Radialschnitt erkennt man, dass die Träger 26, 26', in denen die Reibräder 27, 27' exzentrisch gelagert sind, einer Getriebeeinheit mit ihren oberen Enden 36, 36' entsprechende Öffnungen im oberen Querjoch 13 durchsetzen. Die Enden 36 sind dabei in herkömmlicher Weise mit oberen Lagern 25, 25' versehen, deren Oberflächen gewölbt sind, da die Träger 26, 26' Verschwenkbewegungen ausführen können. Desgleichen ist der Befestigungszapfen 16 zur Aufnahme des oberen Querjoches 13 mit einer gewölbten Aussenfläche versehen, an der die Öffnung des Querjoches 13 ihn berührt.

Die Reibräder 27, 27' sind in Aussparungen 28, 28' in den Trägern 26, 26' eingesetzt und exzentrisch darin gelagert, wobei der Exzenterabschnitt 29, 29' den Träger 26, 26' durchsetzt und der Exzenterabschnitt 30, 30' die Reibräder 27, 27' trägt.

Die Unterseiten der Träger 26, 26' durchsetzen das untere Querjoch 31, wobei hier ebenfalls Lager 25 mit gewölbter Aussenfläche vorgesehen sind, an denen die Ränder der im unteren Querjoch 31 vorgesehenen Aussparung anliegen. Ferner sind die Träger nach unten jeweils durch einen Halter 34, 34' verlängert, der fest mit einem hydraulisch betätigbarem Kolben 32, 32' verbunden ist, so dass bei entsprechender Beaufschlagung der Kolbenoberseite bzw. der Kolbenunterseite eine geringfügige Anhebung bzw. Absenkung des gesamten Trägers 26, 26' durchgeführt werden kann; der Verschiebeweg beträgt üblicherweise etwa 2 mm.

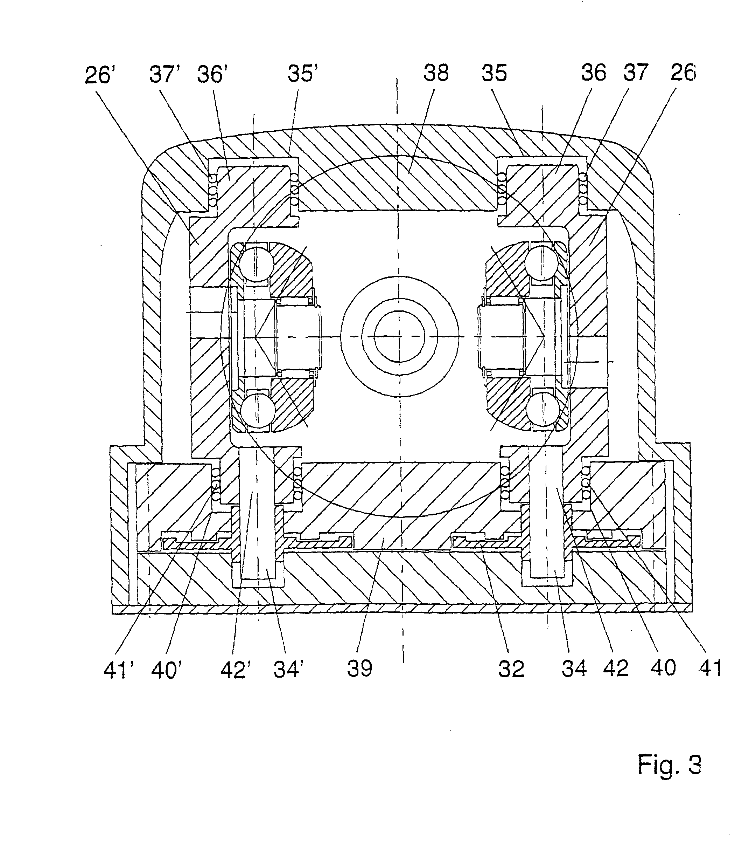

Fig. 3 zeigt nun den Radialschnitt durch eine erheblich vereinfachte Trägerlagerung in dem erfindungsgemäss ausgestalteten stufenloses Reibradgetriebe. Im oberen Abschnitt des Gehäuses 38 sind hierbei zwei Aussparungen 35, 35' vorgesehen, in welche die oberen Enden 36, 36' der Träger 26, 26' eingreifen. Zwischen den senkrechten Abschnitten der Aussparungen 35, 35' und den Enden 36, 36' ist ein Lager 37, 37' vorgesehen, das als Gleitlager oder Kugellager ausgebildet sein kann. Dieses Lager 37 ermöglicht die freie Verdrehbarkeit des Trägers 26 in der Aussparung 35 sowie das durch den hydraulischen Kolben 32 verursachte Anheben bzw. Absenken des gesamten Trägers 26 aufgrund des Spiels, das zwischen der Oberseite des Endes 36 und der Öffnung 35 vorgesehen ist.

An der Unterseite des Gehäuses 38 ist eine fest mit ihm verbundene Halterung 39 vorgesehen, in welche ebenfalls Aussparungen 40, 40' eingearbeitet sind, in die die unteren Enden 42, 42' der Träger 26, 26' eingreifen, die mit den Haltern 34, 34' verbunden sind. Auch hier sind zwischen den Enden 42, 42' der Träger und den Aussparungen 40, 40' entsprechende Gleit- oder Kugellager 41, 41' vorgesehen.

Die Erfindung bietet also eine erhebliche Vereinfachung des Aufbaus eines stufenlosen Reibradgetriebes, da sowohl die oberen und unteren Zapfen mit den zugehörigen Befestigungsvorrichtungen und die oberen und unteren Querjoche entfallen können. Die Lagerung der Träger ist erheblich steifer; auch die Herstellungskosten werden dadurch gesenkt, da weniger Teile und vor allem weniger bewegte Teile benötigt werden.

### Bezugszeichen

- 1: Getriebe
- 2: Halterahmen
- 3: Eingangswelle
- 4: Anpresseinrichtung
- 5: Eingangsscheibe
- 6: Ausgangsscheibe
- 7: Lagerstützglied
- 8: Zahnrad
- 9: Axialflansch
- 10: Scheibe mit Kurvenbahn
- 11: Ausgangsscheibe
- 12: Eingangsscheibe
- 13: oberes Querjoch
- 14: oberes Querjoch
- 15: Zapfen
- 16: Zapfen
- 17: Verriegelungsanordnung
- 18: Universallager
- 19: Verriegelungsanordnung
- 20: Drehmomentwelle
- 21: Aussparung
- 22: Aussparung
- 25: oberes Lager
- 25': oberes Lager
- 26: Träger
- 26': Träger
- 27: Reibräder
- 27': Reibräder
- 28: Aussparung
- 28': Aussparung
- 29: Exzenterabschnitt
- 29': Exzenterabschnitt
- 30: Exzenterabschnitt
- 30': Exzenteraschnitt
- 31: unteres Joch
- 31': unteres Joch
- 32: hydraulischer Kolben
- 32': hydraulischer Kolben
- 33: Führungsstutzen
- 33': Führungsstutzen
- 34: Halter
- 34': Halter
- 35: Aussparung
- 35': Aussparung
- 36: oberes Ende
- 36': oberes Ende
- 37: Lager
- 37': Lager
- 38: Gehäuse
- 39: Halterung
- 40: Aussparung
- 40': Aussparung
- 41: Lager
- 41': Lager
- 42: unteres Ende
- 42': unteres Ende

## Patentansprüche

1. Stufenloses Reibradgetriebe, mit:
- einem Gehäuse,
- einer Eingangswelle (3),
- einer koaxial dazu angeordneten Drehmomentwelle (20),
- zwei koaxial zur Eingangswelle angeordneten Eingangsscheiben (5, 12) mit toroidförmigen Innenflächen,
- zwei koaxial zur Eingangswelle angeordneten Ausgangsscheiben (6, 11) mit toroidförmigen Innenflächen, wobei je eine Eingangsscheibe und eine Ausgangsscheibe ein Paar bilden und die beiden Ausgangsscheiben spiegelsymmetrisch zueinander und nebeneinander angeordnet sind,
- mehreren Reibrädern, die zwischen den Innenflächen der Paare der Eingangsscheiben und Ausgangsscheiben verschwenkbar angeordnet sind zur Übertragung eines Drehmomentes von der Eingangsscheibe auf die zugehörige Ausgangsscheibe,
- Trägern (26,26'), auf denen die Reibräder gelagert sind
- eine Anpresseinrichtung (4) für eine der Eingangsscheiben, um diese in Richtung Ausgangscheiben zu beaufschlagen,
- einem Zahnrad zwischen den beiden Ausgangsscheiben,
- einem Axialflansch (9), der mit der Eingangswelle (3) fest verbunden ist, und auf dem sich diejenige Eingangsscheibe (5) abstützt, die nicht von der Anpresseinrichtung (4) beaufschlagt wird,
**dadurch gekennzeichnet, dass** im oberen Abschnitt (38) des Gehäuses Aussparungen (35, 35') vorgesehen sind, in welche die oberen Enden (36, 36') der Träger (26, 26') mit Spiel eingreifen und dass die oberen Enden (36, 36') der Träger in diesen Aussparungen (35, 35') von einem Lager (37, 37') umgeben sind, welches eine Verdreh- und Axialbewegung ermöglichst.

2. Reibradgetriebe nach Anspruch 1, **dadurch gekennzeichnet, dass** die unteren Enden (42, 42') der Träger (26, 26') in Aussparungen (40, 40') einer mit der Unterseite des Gehäuses fest verbundenen Halterung (39) eingreifen und von Lagern (41, 41') umgeben sind, welche Verdreh- und Axialbewegungen ermöglicht.

## Claims

1. Continuously variable friction transmission, with:
- a casing,
- an input shaft (3),
- a torque shaft (20), which is disposed coaxially with the input shaft;
- two input discs (5, 12), which are disposed coaxially with the input shaft and have toroidal inner faces;
- two output discs (6, 11), which are disposed coaxially with the input shaft and have toroidal inner faces, wherein each input disc and output disc form a pair and the two output discs are disposed in mirror-symmetrical fashion and side by side;
- a plurality of friction wheels, which are pivotably disposed between the inner faces of the pairs of input discs and output discs to transmit a torque from the input disc to the associated output disc,
- carriers (26, 26'), on which the friction wheels are mounted,
- a contact pressure device (4) for one of the input discs, in order to act on this in the direction of the output discs;
- a gear wheel between the two output discs,
- an axial flange (9), which is firmly connected to the input shaft (3) and on which the input disc (5) which is not acted upon by the contact pressure device (4) is supported,
**characterised in that** recesses (35, 35') are provided in the upper section (38) of the casing, in which recesses the upper ends (36, 36') of the carriers (26, 26') engage with play, and that the upper ends (36, 36') of the carriers are surrounded in these recesses (35, 35') by a bearing (37, 37'), which permits a turning and an axial movement.

2. Friction transmission according to Claim 1,
**characterised in that** the lower ends (42, 42') of the carriers (26, 26') engage in recesses (40, 40') of a mount (39), which is firmly connected to the underside of the casing, and are surrounded by bearings (41, 41'), which permit turning and axial movements.

## Revendications

1. Transmission réglable en continu à roues de friction, comprenant :
- un carter,
- un arbre d'entrée (3),
- un arbre de couple (20) coaxial à celui-ci,
- deux poulies d'entrée (5, 12) coaxiales à l'arbre d'entrée et comportant des surfaces intérieures toroïdales,
- deux poulies de sortie (6, 11) coaxiales à l'arbre d'entrée et comportant des surfaces intérieures toroïdales, une poulie d'entrée et une poulie de sortie formant une paire et les deux poulies de sortie étant disposées symétriquement l'une de l'autre comme un objet et son image dans un miroir et l'une à côté de l'autre,
- plusieurs roues de friction disposées entre les surfaces intérieures des paires des poulies d'entrée et des poulies de sortie, pour la transmission d'un couple de la poulie d'entrée à la poulie de sortie correspondante,
- des supports (26, 26') sur lesquels sont montées les roues de friction rotatives,
- un dispositif de pression (4) prévu pour une des poulies d'entrée, pour la charger en direction des poulies de sortie,
- une roue dentée entre les deux poulies de sortie,
- un flasque axial (9) qui est relié rigidement à l'arbre d'entrée (3) et sur lequel s'appuie la poulie d'entrée (5) qui n'est pas sollicitée par le dispositif de pression (4),
**caractérisée en ce que,** dans le segment supérieur (38) du carter, sont prévus des évidements (35, 35') dans lesquels les extrémités supérieures (36, 36') des supports (26, 26') sont engagées avec jeu, et **en ce que** les extrémités supérieures (36, 36') des supports sont entourées dans ces évidements (35, 35') par un palier (37, 37') qui permet un mouvement rotatif et axial.

2. Transmission à roues de friction selon la revendication 1, **caractérisée en ce que** les extrémités inférieures (42, 42') des supports (26, 26') sont engagées dans des évidements (40, 40') d'une attache (39) reliée rigidement au côté inférieur du carter, et sont entourées de paliers (41, 41') qui permettent des mouvements rotatifs et axiaux.
